(19) Europäisches Patentamt / European Patent Office / Office européen des brevets

(11) **EP 3 943 965 B1**

(12) **EUROPEAN PATENT SPECIFICATION**

(45) Date of publication and mention of the grant of the patent:
**29.04.2026 Bulletin 2026/18**

(21) Application number: **20186902.1**

(22) Date of filing: **21.07.2020**

(51) International Patent Classification (IPC):
$G01S\ 7/00^{(2006.01)}$    $G01S\ 7/02^{(2006.01)}$
$G01S\ 7/28^{(2006.01)}$    $G01S\ 7/35^{(2006.01)}$
$G01S\ 13/87^{(2006.01)}$    $G01S\ 13/931^{(2020.01)}$
$G01S\ 13/72^{(2006.01)}$    $G01S\ 7/03^{(2006.01)}$

(52) Cooperative Patent Classification (CPC):
**G01S 7/354; G01S 7/006; G01S 7/023; G01S 7/038; G01S 7/2813; G01S 13/723; G01S 13/87; G01S 13/931;** G01S 2013/9316; G01S 2013/93271; G01S 2013/93274; G01S 2013/93275

(54) **ADAPTIVE OFDM RADAR OPERATION BASED ON TIME VARIABLE SUBCARRIER ASSIGNMENTS**

ADAPTIVER OFDM-RADARBETRIEB BASIEREND AUF ZEITVARIABLEN SUBTRÄGERZUWEISUNGEN

FONCTIONNEMENT RADAR OFDM ADAPTATIF BASÉ SUR DES AFFECTATIONS DE SOUS-PORTEUSE VARIABLES DANS LE TEMPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.01.2022 Bulletin 2022/04**

(73) Proprietor: **Magna Electronics Sweden AB**
**447 37 Vårgårda (SE)**

(72) Inventor: **RYDSTRÖM, Mats**
**447 37 Vårgårda (SE)**

(74) Representative: **Westpatent AB**
**Almekärrsvägen 11**
**443 39 Lerum (SE)**

(56) References cited:
EP-A1- 3 715 898          WO-A1-2016/022727
US-A1- 2013 229 298     US-A1- 2018 348 353
US-A1- 2019 391 246     US-A1- 2020 072 963
US-A1- 2020 119 780

## Description

The present disclosure relates to radar systems for automotive applications. There are disclosed methods and devices for operating a radar transceiver based on assigned subcarriers and time slots in an orthogonal frequency division multiplexed (OFDM) radar system. There are also disclosed radar systems comprising adaptive antenna arrays for mitigating radar self-interference which are particularly suitable for use in OFDM-based radar systems.

Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based. A radar transceiver provides information about the vehicle surroundings in a relative sense, i.e., in relation to the position of the radar transceiver. Most radar transceivers are capable of reporting both distance and radial velocity for a detected target.

A well-known type of radar transmission format is the frequency modulated continuous wave (FMCW) format. This type of radar waveform comprises a 'chirp' signal of linearly increasing and/or decreasing frequency. An FMCW radar transmission is often uncoordinated which means that FMCW radars may interfere with each other as frequency chirps cross or come close to each other in frequency. Interference mitigation techniques have been proposed for FMCW radars which repair the radar signal after interference has occurred, see, e.g., EP3489710 A1. Although these techniques are often quite effective, alternative ways of interference mitigation are of interest.

Recently, orthogonal frequency division multiplexed (OFDM) radar systems have been investigated for automotive applications. These systems may be less prone to interference from other radar transmitters. Especially if the radar transmissions are scheduled in time and/or frequency.

The document US 2020/072963 relates to V2V communication and also to using the communication signal for radar purposes. A reflected preamble, associated with a transmitted V2V communication signal can be received and used as a radar signal at a first vehicle. The communication signal has been originally transmitted by the first vehicle and thereafter reflected by another object such as a second vehicle for which the V2V communication is intended. It is also mentioned that an applied signal bandwidth may be adapted for the emitted radar signal.

US 2020/119780 relates to providing ranging capabilities by taking advantage of a larger number of antenna modules. It is mentioned that In OFDM radar, it is preferred that the sub-carriers span the entire channel bandwidth for best range resolution without un-used gaps during a radar "frame" period. Furthermore, since sub-carriers are dynamically assigned and may not all be populated simultaneously, the channel response can be averaged over symbol periods with non-zero sub-carrier powers, as long as sufficient measurement time, radar frame duration, is available.

US 2019/391246 relates to a continuous arbitrary waveform radar configured for transmitting and receiving signals over a selected communication band. Reducing velocity channel width improves speed estimates by selecting velocity channel of maximum response. For objects close to the radar or large objects further away the accuracy improvement will be significant.

US 2018/348353 discloses a wireless communication chipset that comprises radar transceivers and antennas.

WO 2016/022727 relates to sidelobe cancellation for Simultaneous Transmit and Receive (STAR) systems. Attenuators and TTDs (true time delay) are used to tune the operation of each of corresponding auxiliary cancelling elements and to cancel the greatest amount and amplitude of sidelobes coupled between a transmit array and a receive array.

US 2013/229298 relates to determining a trajectory of an item using surveillance point data associated with plural sensors for tracking the item. A model for sensor accuracy for a sensor type may be predetermined. Sensor accuracy models may be applied to trajectory point data associated with each sensor type to determine an accuracy weighting for each surveillance track point generated by a respective sensor.

However, there is a need for further developments in order to realize the full potential of OFDM-based radar operation.

It is an object of the present disclosure to provide radar transceivers, control units, tracking algorithms, and other methods for radar operation based on varying assignments of subcarriers and time slots in an OFDM-based radar system.

This object is obtained by a radar transceiver for automotive applications. The transceiver comprises processing circuitry arranged to obtain a transmission resource assignment comprising a variable number of assigned subcarriers and time slots for radar operation in a frame having a frame duration, and to transmit a radar signal occupying the assigned subcarriers and time slots in the frame, wherein the processing circuitry is arranged to detect a target from backscatter of the transmitted radar signal, and to determine a range resolution and/or a radial velocity resolution for the target based on the transmission resource assignment. The radar transceiver further comprises a communications interface configured to report the detected one or more targets together with the determined range and/or radial velocity resolution.

Thus, the radar transceiver is configured to transmit radar signals with varying bandwidth and/or time duration. This variation in bandwidth and/or time duration results in variation in range and radial velocity resolutions. Therefore, the radar transceiver is arranged to report the current resolution for the radar data obtained in a given frame together with the actual radar data, in order to allow accurate and robust tracking of the targets despite variation in target detection resolution from frame to frame. This results in a spectrally efficient system where radar transceivers can be dynamically scheduled for transmission on time-frequency resources as needed. Interference between radar transceivers can be efficiently mitigated as scheduling of radar transceivers within interference range of each other on the same time-frequency resources can be avoided.

According to aspects, the processing circuitry is arranged to obtain a transmission power per subcarrier or per group of subcarriers. This variation in subcarrier power allows for scheduling more subcarriers to radars for detecting targets nearby. These 'low-power' subcarriers can be re-used with increased spatial density, thereby providing an increased overall system spectral efficiency. Radar detection range can be maintained, yet at lower range resolution, by allowing high-power transmission on a subset of subcarriers and/or compensating for the low transmission power by an increased coherent integration time.

According to aspects, the processing circuitry is arranged to report a range resolution which increases with number of assigned subcarriers. The reported range resolution can be reported efficiently simply as the number of active subcarriers, allowing the tracking algorithm to roughly account for changes in range resolution. More advanced report formats can also be considered, where the range resolution is reported as an increasing function of the number of active subcarriers in a radar transmission during a frame.

According to aspects, the processing circuitry is arranged to report a radial velocity resolution which increases with the number of time slots. Similar to the range resolution reporting, the report of radial velocity resolution can simply comprise the number of time slots used during a frame, or a more advanced report format based on a function of the number of time slots assigned during a frame.

According to aspects, the processing circuitry is arranged to determine a transmitted energy as function of number of assigned subcarriers and time slots, and the communications interface is configured to report an estimated target detection range associated with the transmission resource assignment. This way a tracking algorithm can adjust track update mechanisms based on transmitted energy to account for variation in detection signal to noise ratio.

According to aspects, the processing circuitry is arranged to determine the transmitted energy also as function of a transmitted power per subcarrier in the transmission resource assignment. Thus, variation in subcarrier power can be accounted for during tracking, which is an advantage.

According to aspects, the radar transceiver comprises a transmit antenna array and/or a receive antenna array. The transmit antenna array and/or the receive antenna array is configured to reduce power of the transmitted radar signal from the transmit antenna array towards the receive antenna array while maintaining transmitted power in a main lobe direction. This way self-interference can be reduced in an efficient and robust manner. The antenna array configuration can be made in dependence of the assigned subcarriers, thereby allowing for a more accurate beamforming operation. For instance, a subcarrier assignment associated with high transmitted energy which can be expected to generate radar detections at long range can be used during calibration to ensure that radar range capability is maintained also after calibrating the antenna array.

The object is also obtained by a control unit for automotive applications, arranged to track one or more targets based on radar detections. The control unit is arranged to obtain the detections from a radar transceiver in frames having frame durations and to obtain respective range and/or radial velocity resolutions determined in dependence of a transmission resource assignment of the radar transceiver in each frame. The control unit is arranged to track the one or more targets by weighting the radar detections relative to a-priori track data in dependence of the range and/or radial velocity resolution. Thus, there is disclosed herein a control unit configured to make use of the variable resolution radar data from the radar transceiver discussed above in a robust manner by weighting radar data in dependence of resolution during tracking. Herein, weighting means that more or less emphasis is placed on new data in comparison to existing track data in dependence of the current resolution of the data. Thus, if a high resolution track is present, and a relatively low resolution detection of a target is received, then more emphasis will be placed on existing track data during track update. If, on the other hand, high resolution data is obtained, then more emphasis will be placed on the new data compared to the existing track data.

According to aspects, the control unit is arranged to track the one or more targets by respective Kalman filters, wherein a Kalman filter gain for each Kalman filter is configured in dependence of the range and/or radial velocity resolution for each frame. The Kalman filter framework allows for adjusting to variation in resolution in a straight-forward manner, as will be explained in the following. A covariance estimate provided by the Kalman filter can be used by a tracking algorithm to determine if the track is sufficiently accurate or if additional bandwidth and/or integration time transmissions are required in order to increase track accuracy up to the required level.

According to aspects, the control unit is arranged to track the one or more targets by respective particle filters, wherein a particle filter gain for each particle filter is configured in dependence of the range and/or radial velocity resolution for each frame. The particle filter tracking implementation is also suitable for use with the radar data of variable resolution. The spread of particles can be used to determine requests for bandwidth and/or coherent integration time in order to meet requirements on target tracking accuracy for different types of targets in different scenarios.

According to aspects, the control unit is arranged to maintain a connection to a cellular communication system, and to obtain a transmission resource assignment comprising a variable number of assigned subcarriers and time slots for radar operation in a frame having a frame duration from the cellular communication system, and to control the radar transceiver to transmit a radar signal occupying the assigned subcarriers and time slots in the frame. This way the scheduling functions of the cellular communication system is re-used for radar operation. Since the time-frequency resources are scheduled to avoid interference, radar interference between nearby radar transceivers is automatically mitigated, which is an advantage. Many cellular communication systems also allow geographical roaming, thus providing seamless radar operation as a vehicle drives over longer distances, since the vehicle will be handed over from base-station to base-station as it travels.

According to aspects, the control unit is arranged to determine a need to separate two or more closely spaced targets, and to request a transmission resource assignment comprising increased bandwidth and or time duration in response to determining the need to separate two or more closely spaced targets. Thus, overall spectral efficiency is increased in the radar system, since this type of target resolution operation or target identification need only be performed from time to time, and not in all transmission frames. The overall consumed bandwidth by radar transceivers in a geographical area may decrease drastically, especially for tracking targets located far away. Instead, an increased coherent integration time can be requested in order to maintain detection range and resolution in detection of target radial velocity.

According to aspects, the control unit is arranged to quantify a need to determine a number of targets located in a field or in fields of view of the radar transceiver, and to request a transmission resource assignment comprising increased bandwidth and or time duration in response to determining the number of targets located in the field or fields of view. This target identification procedure can be performed regularly in order to keep track of the targets in the field of view, but it does not need to be performed in every transmission frame. Thus, time-frequency resources in the system can be vacated and made available to other radar transceiver, thereby increasing overall spectral efficiency in the system.

There are also disclosed herein radar systems, vehicles and radio base stations associated with the above-mentioned advantages. The vehicles, radio base stations, and general purpose control units disclosed herein are associated with the same advantages as discussed above in connection to the different methods.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in more detail with reference to the appended drawings, where

Figure 1 schematically shows a vehicle radar operation;
Figure 2 illustrates example subcarrier assignments;
Figure 3 illustrates a range-Doppler map and detections;
Figure 4 illustrates radar operation;
Figure 5 schematically illustrates a tracking system;
Figure 6 illustrates a radar self-interference scenario;
Figure 7 illustrates notching for interference avoidance;
Figures 8A-B are flow charts illustrating methods;
Figure 9 schematically illustrates a control unit; and
Figure 10 shows an example computer program product;

DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

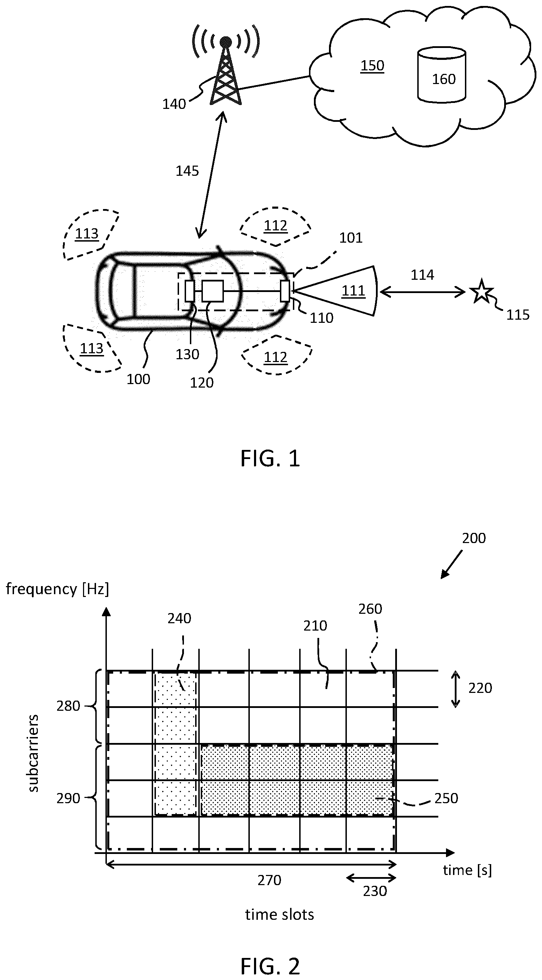

Figure 1 schematically illustrates a vehicle 100 comprising at least one radar transceiver 110 which is part of a radar system 101. The radar system 101 is associated with at least one field of view 111, 112, 113. A front radar is associated with a forward directed field of view 111 extending in front of the vehicle 100, and normally to a range of about 150-200 m. The radar system 101 may optionally also comprise shorter range side radars with fields of view 112 extending laterally to the sides of the vehicle 100 and also rearward looking radars associated with fields of view 113 covering areas to the rear of the vehicle 100. A typical range of a corner radar or rearward looking radar may be on the order of 80 meter or so.

A radar transmission 114 from the radar transceiver 110 is reflected or scattered by a target 115, often referred to as radar signal backscatter, which is then detected by the radar transceiver 110. The radar transceiver 110 is connected to a central control unit 120 which may control at least some operations of the radar transceiver 110 and receive target data from the radar transceiver. This control may comprise transmission timing, transmission frequency content, as well as the actual transmitted time waveform.

The control unit 120 may be connected to a cellular communications unit 130 arranged to communicate 145 with a cellular communication system 140. This communication system may, e.g., be a third generation partnership program (3GPP) defined access network like the fourth generation (4G) or the fifth generation (5G) access networks. The access network may provide access to remote networks and other resources such as, e.g., the Internet 150.

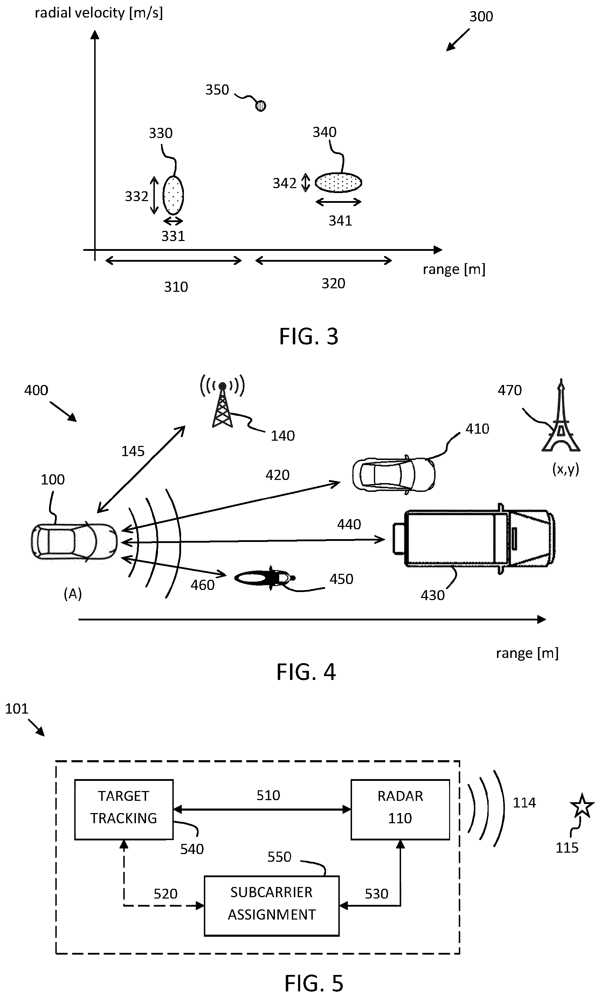

It is appreciated that the radar transceiver 110, the control unit 120, and the cellular communications unit 130 may be integrally formed, perhaps even on a single chip, or arranged separate from each other. Such systems will be further discussed below in connection to Figure 5. It is also appreciated that some processing functions may be performed by resources in a remote network, such as a remote server 160. Thus, functions of the radar transceiver 110 and/or control unit 120 may be performed remotely on, e.g., the remote server 160.

In 4G and 5G 3GPP networks, communication is based on orthogonal frequency division multiple access (OFDM). In OFDM, subcarriers are used to convey information between transmitter and receiver. Different subcarriers are assigned to different users over different time slots, which allow users to communicate without interfering significantly with each other. A user may, generally, be assigned a variable number of subcarriers over a variable number of time slots in order to meet current bandwidth and delay requirements of the user. A user wanting to transmit or receive large quantities of data may be assigned more subcarriers and time slots than a user not having much data to transmit or receive. Thus, a user can be assigned communications resources as needed. Communication in a cellular communications network or access network by the OFDM transmission format is generally known and will therefore not be discussed in more detail herein.

The OFDM transmission format can also be used for radar operation, see, e.g., C. Baquero Barneto et al., "Full-Duplex OFDM Radar With LTE and 5G NR Waveforms: Challenges, Solutions, and Measurements," IEEE Transactions on Microwave Theory and Techniques, vol. 67, no. 10, pp. 4042-4054, Oct. 2019, and references cited therein. The transmitted OFDM signal is then reflected off targets in the vicinity of the radar transceiver 110 and the backscatter from the radar signal transmission is received at the radar transceiver 110. The range to these targets as well as the relative radial velocity can then be determined by the control unit 120 or directly by the radar transceiver 110. The angle to the target can also be determined in case the radar transceiver 110 comprises an antenna array. OFDM radar signal processing is also known in general and will therefore not be discussed in more detail herein. It is appreciated that the cellular communication transmission 145 and the radar signal 114 may be the same signal, partly the same signal, or different signals. In other words, the cellular communication transmission 145 may be used to request separate time-frequency resources for radar operation by the radar transceiver 110, or the cellular communication transmission 145 and the radar signal transmission 114 can be the same electromagnetic waveform.

The detection range of a radar transceiver, i.e., the distance at which targets of a given radar cross section (RCS) can be detected, depends (among other things) on the energy of the transmitted signal. The higher the transmitted energy, the longer the range of the radar. Transmitted energy depends on bandwidth and transmission time duration, as well as on the transmitted power of the different subcarriers. Thus, generally, and for receivers of equal noise figures and the like, the more time-frequency slots that are occupied in an OFDM radar transmission, the longer is the range at which the radar may detect targets.

The range resolution of a radar transceiver is mainly dependent on the bandwidth of the transmitted radar signal. The higher the bandwidth of the transmitted signal, the better the range resolution. Roughly, target range resolution determines radar system bandwidth B as $B = c/2r_{res}$, where c is the speed of light and $r_{res}$ is the required range resolution. Thus, for a range resolution of about 0.15m, a system bandwidth B of about 1 GHz is required. If the system bandwidth is increased, then a finer range resolution is obtained allowing separate detection of closely spaced targets. If the system bandwidth is decreased, closely spaced targets may appear as a single larger target. Also, a single target may generate reflections from different parts of the target. With a high range resolution, such reflections may be individually detectable.

The dwell time or coherent integration time is the time a radar signal coherently illuminates a radar target. It is well known that radial velocity resolution depends on dwell time - the longer the dwell time the higher the velocity resolution. This is because a longer dwell time allows for measuring also very small changes in phase which may be hard to detect if only a short snap-shot of the backscatter is observed. Roughly, $1/T = 2v_{res}f_c/c$, where T is the coherent integration time, $v_{res}$

is the velocity resolution, and $f_c$ is the radar center frequency. Thus, for the same radar center frequency, as coherent integration time increases, the velocity resolution improves and vice versa. This topic is, for instance, discussed in "A novel range-Doppler imaging algorithm with OFDM radar", Xia Yang, Song Zhiyong, Lu Zaiqi, and Fu Qiang, Chinese Journal of Aeronautics, (2016), 29(2): 492-501. Here, two radar detection algorithms based on OFDM are compared. A referenced algorithm is reported to yield a Doppler resolution of $1/MT_r$, where M and $T_r$ denote a number of transmitted pulses and pulse repetition interval, respectively. The proposed algorithm instead yields a Doppler resolution which is proportional to subcarrier spacing and inversely proportional to the number of symbols K. Thus, both algorithms provide improved Doppler resolution with increased dwell time, as expected.

Consequently, it is appreciated that, in an OFDM-based radar system where subcarriers and transmission time slots are assigned on a transmission frame basis, the range resolution and the radial velocity resolution may vary from frame to frame if the subcarrier assignment and/or time slot assignments vary. Since different radar transceivers will have varying need of resolution in range and radial velocity over time, overall spectral efficiency can be improved by scheduling time-frequency resources dynamically to radar transceivers depending on requests.

Figure 2 shows an example 200 of subcarrier assignments in a frame 260 of an OFDM-based radar system. The available communications resources in the frame 260 are divided into time-frequency slots 210, where each slot 210 is determined by a subcarrier spacing 220 and a time slot length 230. A number of subcarriers and time slots forms the frame 260 having a frame duration 270. A collection of time-frequency resources may be referred to as a resource block. Note that the division into only six time slots and five subcarriers is purely for illustration, actual systems implement entirely different numerologies, often comprising many more subcarriers and time slots in each frame.

It is appreciated that the concept of a transmission frame is herein given a broad interpretation. For instance, the frame may be a frame structure from a 4G or a 5G cellular communication system transmission format, or a frame in a frame structure of a Wi-Fi transmission format, such as one of the transmission formats in the 802.11 family of wireless local area network (LAN) standards. In some OFDM systems, each frame comprises time-frequency resources reserved for pilot transmission allowing synchronization in time and/or phase, as well as channel estimation between transmitter and receiver.

A first resource assignment 240 comprises several subcarriers over a relatively short time duration. Thus, a transmission based on this assignment will be relatively wideband but will only last for a short duration in time.

A second resource assignment 250 comprises a smaller number of subcarriers but extends over a longer time duration.

Since the first resource assignment 240 is of higher bandwidth, the range resolution will be better compared to that of a radar transmission using the second resource assignment 250. However, the second resource assignment is associated with larger transmitted energy due to the longer time duration and can therefore be expected to generate target detections at longer range compared to the first resource assignment 240. The second resource assignment 250 is also associated with a longer coherent integration time over the frame 260, which means that velocity resolution is expected to be better for the second resource assignment 250 compared to the first resource assignment 240.

Suppose further that the cellular access network 140, 150 assigns subcarriers associated with different transmitted powers. For instance, some number of subcarriers 280 may be associated with higher allowable transmitted power compared to other subcarriers 290. This may, e.g., be done in case a more dense frequency re-use is desired for some parts of the transmission band, allowing high bandwidth communications resource assignments for close range operation and lower bandwidth resource assignments for more long range operation. The high power subcarriers reach further and may interfere with receivers located further away, while the low power subcarriers more quickly die off and therefore can only interfere with more closely located receivers. The network may re-use time-frequency resources associated with high power subcarriers less densely over space compared to the subcarriers associated with lower power transmission which can be scheduled or assigned more densely.

A variable power distribution between subcarriers will result in that some assignments result in longer radar range compared to other assignments, again since a high power transmission reaches further compared to a lower power transmission. However, the high power subcarriers will also potentially interfere with more users, simply since it reaches further.

An interesting application of variable power subcarriers is if the scheduling function of the OFDM system, i.e., the function which assigns time-frequency resources to the different users, is also able to assigns transmission powers. In this case the scheduling function may adapt its assigned subcarrier powers in dependence of current traffic conditions. In case many vehicles are located close together in some area, the number of "low-power" subcarriers can be increased. If distances between vehicles are instead larger over some area, more power can be allocated per sub-carrier. This scheduling may be performed, e.g., by the remote server 160 discussed above in connection to Figure 1.

Generally, the detectability of an electromagnetic waveform which is received at a receiver depends on its energy in comparison to the receiver noise (often thermal noise) and distortion present in the receiver circuit. In communication systems this quantity is often denoted Eb/N0, where Eb is the energy per information bit and N0 is the power spectral density of the receiver noise. For a radar waveform, the actual waveform itself carries the information, since it is desired to estimate its delay (which is proportional to the distance between the receiver and the target), and its phase (which will vary over time as function of target radial velocity) relative to what was transmitted. The higher the received signal energy in comparison to the receiver noise, the more accurate the estimation of delay and phase will be.

The well-known radar range equation, or radar equation for short, roughly describes the physical dependencies of the transmit power and the power returning to the receiving antenna as function of the slant range and the reflecting characteristics of the target (often described as the radar cross-section of the target). According to the radar equation, the power Pr returning to the receiving antenna is given by

$$Pr = \frac{Pt\ Gt\ Ar\ \sigma\ F^4}{(4\pi)^2\ Rt^2\ Rr^2}$$

where

Pt = transmitter power,
Gt = gain of the transmitting antenna,
Ar = effective aperture (area) of the receiving antenna,
$\sigma$ = radar cross section, or scattering coefficient, of the target,
F = pattern propagation factor,
Rt = distance from the transmitter to the target, and
Rr = distance from the target to the receiver.

The radar equation can be used to coarsely determine detection range of a radar system if a power or energy threshold for detection can be determined.

Figure 3 schematically illustrates a range-Doppler map 300 where detection range in meters is shown on the x-axis and radial velocity (proportional to Doppler frequency) in m/s is shown on the y-axis. A range-Doppler map may, e.g., be generated by first applying a range-FFT followed by a Doppler FFT. Complex valued correlator structures may also be used to generate similar results. The generation of a range-Doppler map from OFDM radar transmissions is known in general and will therefore not be discussed in more detail herein.

The effects of different types of resource assignments can be understood by considering this type of range-Doppler map. A high resolution detection will appear as a focused area in the map centered at the range and radial velocity of the target, while a lower resolution detection will be more smeared out. In case the range-Doppler map is generated by means of a Fast Fourier Transform (FFT), then the range-Doppler map will be quantized into bins. A range-Doppler map can also, as mentioned above, be generated from more conventional complex correlator processing, where a known transmitted signal is compared to the received backscatter, and where a correlator peak indicates presence of reflected signal energy with a phase that can be used for determining radial velocity.

Low energy transmissions resulting from a resource assignment like the first resource assignment 240 discussed above may generate detections of a target 330 located relatively close to the radar transceiver, i.e., at close range 310. However, such low energy transmissions cannot be expected to generate detectable returns from targets at far range 320. On the other hand, the range resolution 331 will be relatively good for the detections at close range due to the large bandwidth. The resolution in radial velocity 332 is, as discussed above mainly determined by the coherent integration time T, which in some systems may be equated with the transmission time duration in a single transmission frame. A higher energy low bandwidth transmission resulting from something like the resource assignment 250 discussed above can be expected to reach a target 340 relatively far away 320. The range resolution 341 for this target will, however, be somewhat decreased compared to the target 330 due to the more limited bandwidth, while the radial velocity resolution 342 will be comparably improved due to the longer dwell-time. A target 350 detected based on a high bandwidth transmission with long coherent integration time can be detected at long range with high resolution in both range and radial velocity.

Thus, it is appreciated that, in a radar system where a radar transceiver receives transmission assignments comprising a number of subcarriers over a given time duration, the detection performance of the radar transceiver can be determined based on the transmission resource assignment, i.e., the time-frequency resources which are available for the radar transceiver to transmit radar signal. This determination of range and/or radial velocity resolution can be reported to a tracking system together with the actual detection, where it can be put to use to provide a more robust and high performing tracking function. As the resource assignments in terms of bandwidth and integration time change from frame to frame, the tracking system can adjust its processing to account for the variation in resolution.

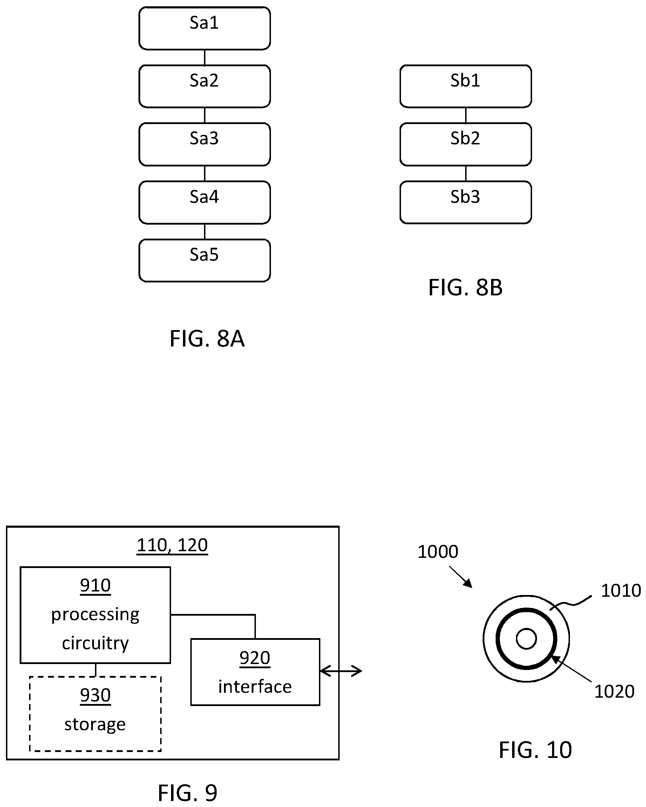

To summarize, there is disclosed herein a radar transceiver 110 for automotive applications. The radar transceivers disclosed herein are particularly suitable for use in systems like that illustrated in Figure 1, where a vehicle radar system receives resource assignments for transmission from a cellular network. With reference to Figure 5 and Figure 9, which will be discussed in more detail below, the transceiver 110 comprises processing circuitry 910 arranged to obtain a transmission resource assignment 530 comprising a variable number of assigned subcarriers and time slots for radar operation in a frame 260 having a frame duration 270, and to transmit a radar signal 114 occupying the assigned subcarriers and time slots in the frame. The processing circuitry 910 is furthermore arranged to detect a target 115, 330, 340, 350 from backscatter of the transmitted radar signal, and to determine a range resolution and/or a radial velocity resolution for the target based on the transmission resource assignment. The resolution in range is determined mainly from the assigned bandwidth in a frame, i.e., the number of subcarriers that are available for transmission. This bandwidth may be used as input to a function which determines range resolution. For instance, a variation in bandwidth over a frame where a large number of subcarriers are initially assigned followed by an assignment of a reduced number of subcarriers may result in an effective bandwidth somewhere in-between the maximum and minimum bandwidths occupied during the frame duration. The resolution in radial velocity is, as discussed above, mainly determined from dwell-time. Given the assigned resources in a frame, a coherent integration time can be determined from which radial velocity resolution can be determined.

The functions for determining range and/or radial velocity resolution from assigned bandwidth and coherent integration time, respectively, may be implemented as look-up tables or polynomial approximations which can be determined from laboratory experiments or from computer simulation. The functions may also at least in part be derived analytically. The functions stored locally on the vehicle for determining may be updated regularly by the remote server 160 which may implement a verification function for determining range and/or radial velocity resolution from assigned bandwidth and coherent integration time.

The radar transceiver 110 also comprises a communications interface 920 configured to report the detected one or more targets together with the determined range and/or radial velocity resolution 510.

According to some aspects, the reported range and/or radial velocity resolution may be a quantized value, selected from a finite range of values, or it can be a numeric value indicating actual resolution in meters and Hertz (or m/s). According to some other aspects, the functions for determining range and/or radial velocity resolution from assigned bandwidth and coherent integration time may simply comprise a function which represents the assigned time-frequency resources in an efficient manner. In this case the determined range and/or radial velocity resolution may be reported as a representation of the assigned time-frequency resources, i.e., the assigned subcarriers and time slots in the current frame.

Figure 4 illustrates a traffic scenario 400 where the vehicle 100 has a number of targets 410, 430, 450 in its forward field of view. Some targets, like the motorcycle 450, are relatively close to the vehicle 100. Thus, to safely provide functions such as ADAS or AD, it is most likely desired to maintain a high accuracy track of the relative position of the motorcycle 450 relative to the vehicle 100. For this, radar transmissions 460 involving high bandwidth is desired, such as the first resource assignment 240 discussed above in connection to Figure 2. However, detection range is not paramount, even though the RCS of the motorcycle is not very big. Thus, low power transmissions may be sufficient in order to maintain the desired target information.

A bit farther away, two targets 410, 430 are present. There is no imminent danger of collision with any of these targets, which means that the ADAS or AD function only needs to maintain approximate locations of the targets. However, any of these targets could suddenly perform a hard brake maneuver, which could result in a dangerous situation. To monitor the targets 410, 430 by radar transmission 420, 440, a relatively low bandwidth transmission is sufficient. Especially if this low bandwidth transmission extends over a longer coherent integration time duration, such as the second resource assignment 250 discussed above in connection to Figure 2. With this type of resource assignment, resolution in radial velocity is maintained and radar detection range also. The radar system may, from time to time, illuminate the two targets by a high bandwidth - high energy transmission for target identification purposes, i.e., to see if there is still two targets or if one of the targets have moved away, perhaps in front of the other target where it is no longer visible by the radar sensor.

There may also be fixed targets at known location (x,y), these targets will be discussed in more detail below in connection to antenna array calibration.

Figure 5 shows functions of an example radar system 101. The system comprises the radar transceiver 110 discussed above, which is communicatively coupled to a target tracking module 540 that performs target tracking based on data 510 received from the radar transceiver 110. The radar transceiver 110 is at least indirectly connected to a subcarrier assignment module 550 which assigns subcarriers and time slots for radar operation in each frame, i.e., provides a transmission resource assignment 530. This subcarrier assignment module 550 is optionally also connected 520 to the target tracking module 540.

The subcarrier assignment module 550 may comprise the cellular communications unit 130 arranged to communicate 145 with the cellular communication system 140 discussed above in connection to Figure 1. The network 140 then assigns or schedules subcarriers and time slots, which the subcarrier assignment module then forwards to the radar transceiver 110. The subcarrier assignment module 550 may also request resources from the network, **e.g.,** in dependence of a requirement received from the target tracking module 540. Thus, if the target tracking module determines, e.g., that it needs to resolve two or more closely spaced targets, the system may request a temporary increase in transmission bandwidth in order to provide sufficient range resolution to resolve the targets. The target tracking module 540 may also from time to time need to look further ahead and can then be assigned resources allowing a high energy transmission.

The target tracking module 540 may be comprised in the control unit 120 discussed above in connection to Figure **1.** The control unit 120 is then arranged to track one or more targets based on the radar detections received from the radar transceiver 110. It is noted that the radar detections may be communicated between the radar transceiver 110 and control unit 120 as a list of targets, **i.e.,** where some radar detection processing has been performed already at the radar transceiver 110, or as more unprocessed data, such as a range-Doppler map or even raw data received at the radar receive antenna which the target tracking module can process further as required for the application at hand.

The control units disclosed herein are arranged to exploit the variation in resolution in order to provide a more robust and accurate target tracking. Thus, high bandwidth transmissions are weighted more heavily in the tracking process compared to transmissions of reduced bandwidth from which accurate position data cannot be obtained. Also, high resolution radial velocity detections are weighted more compared to low resolution radar detections.

In other words, there is also disclosed herein a control unit 120 for automotive applications. The control unit 120 is arranged to track one or more targets 115 based on radar detections. The control unit 120 is arranged to obtain the detections from a radar transceiver 110 in frames 260 having frame durations 270, and to also obtain respective range and/or radial velocity resolutions 510 from the radar transceiver 110. These resolutions have been determined in dependence of a transmission resource assignment of the radar transceiver in each frame. The control unit 120 is arranged to track the one or more targets by weighting the radar detections relative to a-priori track data in dependence of the range and/or radial velocity resolution 510.

The control unit 120 and the radar transceiver 110 may be implemented together as a radar system on chip (SOC) 500.

As discussed above, and with reference to Figure 1 and Figure 5, the control unit 120 is optionally arranged to maintain a connection 145 to a cellular communication system 140, 150, and to obtain a transmission resource assignment 530 comprising a variable number of assigned subcarriers and time slots for radar operation in a frame 260 having a frame duration 270 from the cellular communication system 140, 150, and to control the radar transceiver 110 to transmit a radar signal 114 occupying the assigned subcarriers and time slots in the frame. Thus, the control unit 120 is in contact with functions in the cellular communication system 140, 150, such as the time-frequency scheduling function. The time-frequency resources assigned to the radar system 101 by the scheduling function is communicated to the radar transceiver 110, which uses the assigned resources for radar operation.

With reference again to Figure 4 the control unit 120 is optionally arranged to determine a need to separate two or more closely spaced targets, and to request a transmission resource assignment 530 comprising increased bandwidth and or time duration in response to determining the need to separate two or more closely spaced targets. This may for instance occur as two tracks pass each other, such as when one vehicle overtakes another vehicle. Many tracking algorithms maintain a couple of different tracking hypotheses which are followed over time in order to determine which hypothesis is the most likely one. In case two or more of these hypotheses become more or less equally likely, an increased resource assignment can be requested in order to select between the two. An increased bandwidth and or time duration resource assignment can also be requested in case two tracks come too close to each other such that they cannot be separated. However, this increased bandwidth and or time duration resource assignment may not be necessary to request in every transmission frame, since it may be enough to illuminate the targets once in a while to see if the two targets are still close together or if something else has happened.

A practical implementation of this request mechanism may, e.g., employ thresholds which trigger periodic requests for increased time and or bandwidth resources when two or more targets come close to each other. An implementation may also be based on a trained neural network which outputs a resource assignment based on current vehicle environment and driving scenario.

The control unit 120 may also be arranged to quantify a need to determine a number of targets located in a field or in fields of view 111, 112, 113 of the radar transceiver 110, and to request a transmission resource assignment 530 comprising increased bandwidth and or time duration in response to determining the number of targets located in the field or fields of view. This need may for instance arise if several targets are located close together. Again, a practical implementation may resort to simple thresholding mechanisms to trigger the resource requests, or on more advanced algorithms such as algorithms based on machine learning or the like. The need to determine the number of targets located in the field or in the fields of view 111, 112, 113 of the radar transceiver may also be determined periodically by a timer mechanism. Every time the timer expires, more time-frequency resources are requested to determine if the number of maintained tracks by the tracking algorithm corresponds to the number of detected targets, or if there is a mismatch between the number of maintained tracks and the number of detected targets when using the high bandwidth and/or time duration radar transmission.

According to some aspects, the processing circuitry 910 of the radar transceiver 110 is arranged to obtain a transmission power per subcarrier or per group of subcarriers. This transmission power may vary from subcarrier to subcarrier, which means that some resource assignments of subcarrier and time slots are associated with higher transmission power compared to other resource assignments. This transmission power may optionally also be accounted for when weighting radar detection in relation to a-priori track data during target tracking. A high power transmission is then weighted more heavily compared to a corresponding low power transmission, since the transmitted energy will be larger in the high power transmission compared to the low power transmission.

The processing circuitry 910 may furthermore be configured to report a level of perceived interference, or noise level, to a remote processing unit, such as the remote server 160. This information can be used by the system to adjust subcarrier powers in some area or throughout some part or parts of a network in order to improve radar operation by lowering interference levels.

According to some aspects, the processing circuitry 910 is arranged to report a range resolution which increases with number of assigned subcarriers. This is because the system bandwidth is determined by the number of subcarriers which is used concurrently during the radar transmission. The more subcarriers, the higher the bandwidth. Thus, range resolution can be communicated by communicating the number of subcarriers which were used to obtain a given target detection or a given chunk of radar data. The contents and format of such reports were discussed in detail above. The report may comprise an actual estimated resolution, or just a quantized level which indicates current resolution. The report may also comprise a representation of the resource assignment, from which the actual resolution can be inferred or even derived.

According to some aspects, the processing circuitry 910 is arranged to report a radial velocity resolution which increases with the number of time slots. Similar to the case for range resolution, the radial velocity resolution depends on the number of time slots which were used during a frame. The more time slots that were occupied, the longer the coherent integration time is, and therefore the better the velocity resolution is. The resolution in radial velocity can, roughly, be communicated as the number of occupied time slots in a frame. Again, the contents and format of such reports were discussed in detail above. The report may comprise an actual estimated resolution, or just a quantized level which indicates current resolution. The report may also comprise a representation of the resource assignment, from which the actual resolution can be inferred or even derived.

The control unit may be arranged to track the one or more targets 115 by respective Kalman filters, or variants thereof, such as Extended Kalman filters or unscented Kalman filters. A Kalman filter gain for each Kalman filter is then configured in dependence of the range and/or radial velocity resolution 510 for each frame.

The Kalman filter maintains an estimate of target state by sequentially updating state based on data input weighted in relation to a-priori track data, i.e., the target state before receiving the new data.

The estimate of target state at sample k (or, equivalently, at discrete time index k) given radar data input up to time k is given by

$$\widehat{x}_{k|k} = \widehat{x}_{k|k-1} + K_k \widetilde{y}_k$$

where $\hat{x}_{k|k-1}$ is a state prediction based on a-priori available data, $K_k$ is a Kalman gain factor, and $\tilde{y}_k$ is the innovation or measurement pre-fit residual. The Kalman gain factor $K_k$ can be adjusted based on range and/or radial velocity resolutions for the given measurement data. For instance, a table of Kalman gain factors adjustments for different time-frequency resource assignments can be maintained locally in the radar system 101 and/or at the remote server 160.

In more detail, a radar detection or measurement is modelled as

$$z_k = H_k x_k + v_k$$

where $H_k$ is an observation model which maps the true state space (comprising, e.g., target position, target velocity, and target acceleration) into the observed space (range and radial velocity, and sometimes also angle) and $v_k$ is observation noise. The range and radial velocity resolutions will have an impact on the statistics of $v_k$. This impact may be quantified a-priori analytically or by experimentation. The results of this quantification can be stored in the radar transceiver and/or in the control unit and used to translate between a given resource assignment and corresponding statistics for the observation noise $v_k$.

Thus, different resource assignments in terms of number of subcarriers and number of time slots can be incorporated into the Kalman filter tracking process in an efficient and robust manner.

The covariance matrix estimate $P_{k|k}$ in a Kalman filter algorithm at sample k given radar data input up to time k is determined as

$$P_{k|k} = (I - K_k H_k) P_{k|k-1} (I - K_k H_k)^T + K_k R_k K_k^T,$$

where $P_{k|k-1} = F_k P_{k-1|k-1} F_k^T + Q_k$, and where $P_{k|k-1}$ is the covariance matrix estimate at time k given data up to time k-1, $I$ is the identity matrix, $K_k$ is the Kalman gain at time step k, $H_k$ is an observation matrix at time step k, $R_k$ is an assumed

covariance matrix of the measurement noise, i.e., describing the uncertainty in the input radar signals, $F_k$ is a state transition matrix at time step k, and $Q_k$ is a process noise at time step k. Note how the estimate of covariance matrix $P_{k|k}$ does not depend on the actual realization of radar data, only on the assumed statistics of the error distributions and processes. This covariance matrix estimate $P_{k|k}$ can be used by the target tracking function to determine when, e.g., higher bandwidth is required in order to resolve two targets, or to maintain safe vehicle control with respect to some nearby target.

Alternatively, the control unit 120 may be arranged to track the one or more targets 115 by respective particle filters, wherein a particle filter gain for each particle filter is configured in dependence of the range and/or radial velocity resolution 510 for each frame. The particle filter gain is similar to the Kalman gain discussed above. It can be adjusted in a manner similar to the Kalman filter gain. Thus, there concepts discussed herein can be applied also with particle filters in a straight-forward manner. The spread of particles, i.e., the distribution variance of particles in the particle filter, can be used as a measure of track accuracy. The target tracking algorithm can request transmission resources in dependence of this particle spread. If the spread goes above a threshold additional resources in terms of bandwidth and/or coherent integration time can be requested, and vice versa.

According to some other aspects, the processing circuitry 910 is arranged to determine a transmitted energy as function of number of assigned subcarriers and time slots, and wherein the communications interface 920 is configured to report an estimated target detection range associated with the transmission resource assignment. This target detection range allows the target tracking function to selectively update its maintained tracks. For instance, with reference to Figure 4, suppose that the target tracking function is tracking some targets 450 close to the vehicle 100, and some other targets 410, 430 further away from the vehicle. Then, if the transmitted energy is too low for detecting the targets far away, perhaps indicated by the radar equation, then the target tracking function may skip the updating of such tracks and only update tracks corresponding to targets located close by. It is noted that the Kalman filtering equations can be used to automatically provide this type of selective track update function. This is because the covariance $R_k$ of the measurement noise $v_k$ can be modelled as dependent on received energy, perhaps determined from the radar equation. Thus, as target range becomes large in comparison to transmitted energy, the Kalman gain will reflect this and not put any significant weight on the measurement. A similar effect can be observed for a particle filter implementation, where the weighting will be achieved by the derived particle gain.

Of course, in case a variable transmit power is assigned to different subcarriers, the processing circuitry 910 may be arranged to determine the transmitted energy also as function of a transmitted power per subcarrier in the transmission resource assignment.

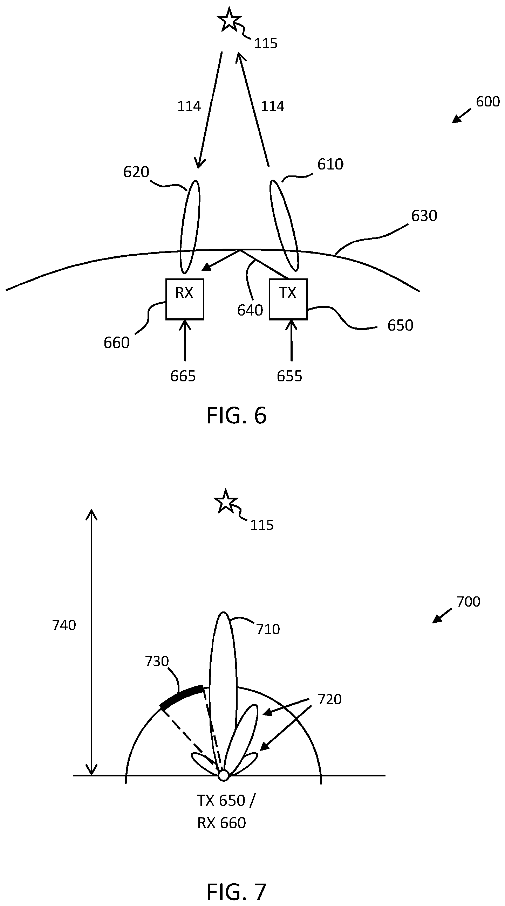

Figure 6 and Figure 7 illustrates a radar transceiver system 600 comprising antenna arrays 650, 660 arranged at the transmitter TX and/or at the receiver RX. These antenna arrays can be used to generate different antenna patterns, such as focused main lobes 610, 620 which cover a desired field of view. The antenna patterns are determined by an antenna array setting or calibration comprising phases and/or amplitude weights to be applied at the different antenna elements, which phases and/or amplitude weights may be configured in software. Thus, each array comprises an interface 655, 665 where the antenna pattern of the antenna array can be configured by, e.g., a control unit such as the control unit 120, or directly by the radar transceiver 110.

Automotive radars are often arranged behind bumpers or other obstructing objects 630. These objects tend to reflect a part of the transmitted radar signal 640 such that it reaches the receiver with high power. This 'leakage' is sometimes referred to as self-interference, and it limits the dynamic range of the radar transceiver system. The phenomenon is generally known and will therefore not be discussed in more detail herein.

To mitigate this self-interference it is proposed herein to beamform the transmission and/or the reception as schematically illustrated in Figure 7, where a beamformed antenna pattern 700 is schematically illustrated. This pattern 700 comprises a main lobe 710 covering the desired field of view. The antenna pattern comprises side lobes 720, but a portion of the antenna diagram 730 is associated with significant reduction in gain. Thus, signal paths 640 between transmitter TX and receiver RX via obstructing objects 630 like a bumper can be suppressed and self-interference reduced. In other words, there is disclosed herein a radar transceiver 110 comprising a transmit antenna array 650 and/or a receive antenna array 660, wherein the transmit antenna array and/or the receive antenna array is configured to reduce power of the transmitted radar signal 114, 640 from the transmit antenna array 650 towards the receive antenna array 660 while maintaining transmitted power in a main lobe direction 710.

To accomplish this, some calibration or antenna array configuration is required, since the antenna array must be configured with phases and/or amplitudes at the different antenna element in order to generate the desired antenna radiation pattern. It is relatively straight forward to find a pattern which is associated with reduced power of the transmitted radar signal 114, 640 from the transmit antenna array 650 towards the receive antenna array 660, since leakage between transmitter and receiver is seen during radar operation. For instance, different preconfigured or even randomized settings of the antenna array or arrays, i.e., different relative phases on the antenna array element feeds, can be tried until a suitable antenna array setting is found which is associated with a reduced power of the transmitted radar signal 114, 640 from the transmit antenna array 650 towards the receive antenna array 660. However, maintaining transmitted power in the main lobe direction 710 is more challenging. This main lobe transmission can either be measured in lab or other measurement facility, or it can be determined in field.

The self-interference can be quantized as an increase in noise floor, such as a signal level in a range-Doppler map 200 in bins where no target is present. The self-interference can also be quantified as a signal level in the very first range bins in comparison to a more distant target with known or reasonably accurately estimated RCS.

The self-interference can also be quantized implicitly, e.g., by sweeping antenna array settings while monitoring the detection quality (in terms of, e.g., SNR) with respect to some target.

With reference to Figure 4 and Figure 5, the target tracking module 540 maintains tracks to different targets 410, 430, 450. The target tracking system is also likely to detect stationary objects 470 at known geographical locations relative to the vehicle 100 (which may comprise location means such as a global positioning receiver). These target tracks and stationary targets can be used to maintain transmitted power in the main lobe direction 710 while adjusting the setting of the antenna array or arrays to reduce power of the transmitted radar signal 114, 640 from the transmit antenna array 650 towards the receive antenna array 660. For instance, the target tracking module 540 may instruct the radar transceiver 110 to attempt a re-calibration in-field of the antenna arrays and evaluate candidate antenna settings given a-priori information on targets located nearby and further away. Thus, any calibration attempts where targets are lost can be discarded. For instance, it can be required that the stationary target be visible at a range of, say 200m. Any antenna array setting which does not generate a target detection corresponding to the stationary target at 200m is then discarded.

To exemplify, with reference to Figure 4, suppose that the vehicle 100 is driving along a road. At point (A), the vehicle 100 may receive data via wireless link 145 from a remote server, informing the vehicle that there is a check-point approaching where radar functionality may be verified, and/or radar antenna arrays calibrated to make sure that the desired field of view is covered. The check point is a geographical area where the radar system on the vehicle 100 should be able to detect, e.g., the stationary target 470 at a given distance. The data obtained from the remote server, or from some cloud-based resource 150, may also comprise data related to the RCS of the target, expected target bearing, and so on. The radar system may then, as it enters the check-point region, compare its detection list to the obtained data. If it finds a detection corresponding to the target 470 in its detection list, then all is in order and no action is taken. However, if no detection in the detection list corresponds to the target, then an alarm may be triggered and/or some maneuver or procedure initialized. If the system is a safety critical system, such as a radar system in an autonomous vehicle, then an emergency brake operation may be performed. However, if the radar system is not safety critical, such as an ACC or the like, then the function can be inactivated, and service of the radar system can be proposed or even directly scheduled.

The vehicle 100, or the control unit 120 on the vehicle, may also initialize an antenna array calibration routine when entering the check-point. This calibration routine may comprise adjusting antenna array feed function to minimize self-interference conditioned on maintaining the detection of the check-point target which the vehicle has been informed should be present when entering the check-point. Also, the calibration routine may simply involve stepping through some candidate settings and selecting the setting which provided the best detection of the check-point target.

The obtained data related to the check-point may comprise a number of different entries or data items, for instance, according to different but compatible aspects, the data may comprise an expected radar detection distance 110. This detection distance may be given as a single distance value in meters, or as a range of distances. The expected radar detection distance can also be given as a probability distribution over some range of expected distances.

The data may also comprise an expected radar detection strength. This type of data can be used to check if the radar system given the current antenna array setting provides the expected signal to noise ratio at the check-point. For instance, an antenna may have been somewhat tilted or dented and thus suffer from reduced performance. If the expected detection is regularly stronger than the corresponding detection by the radar system, then it can be inferred that the radar system has suffered from some form of performance degradation, even if the detection is made.

The target object 470 which the fault detection routine relies upon may be a passive target, such as some type of reflective object, or it may be an active target such as a radar transponder. In such cases, the data received by the vehicle 100 over the wireless link 145 may comprise a transponder return modulation pattern or the like allowing the radar system to identify the calibration target by monitoring the return modulation from the transponder. This simplifies the comparison between the expected detection and the list of target detections maintained by the radar system. Antenna array calibration based on the presence of a known transponder is particularly straight forward, since the detection quality of the modulated return signal from the transponder can be quantified in a straight forward manner, e.g., via its SNT, and the antenna setting giving the best detection performance can be selected.

When calibrating the antenna array, a pre-determined sequence of antenna array settings can be stepped through, and the setting which results in the smallest self-interference while providing the required transmitted power in the main lobe direction 710 can be selected, i.e., the setting where all required targets at the check-point are detected at sufficient strength. The antenna array setting can also be randomized according to some randomization technique.

It is appreciated that the antenna array settings obtained over the interfaces 655, 665 is frequency dependent since relative phases depend on carrier frequency. Thus, the antenna array settings may be configured dynamically as function of the scheduled subcarriers. Thus, a more accurate antenna diagram can be obtained which accounts for the actual frequency content of the transmitted and/or the received radar signal.

Figure 8A is a flow chart illustrating methods disclosed herein, performed by the radar transceiver. In particular, there is illustrated a method corresponding to the functions of the radar transceiver discussed above. The method comprises obtaining Sa1 a transmission resource assignment 530 comprising a variable number of assigned subcarriers and time slots for radar operation in a frame 260 having a frame duration 270 and transmitting Sa2 a radar signal 114 occupying the assigned subcarriers and time slots in the frame. The method also comprises detecting Sa3 a target 115, 330, 340, 350 from backscatter of the transmitted radar signal, and determining Sa4 a range resolution and/or a radial velocity resolution for the target based on the transmission resource assignment. The method further comprises reporting Sa5 the detected one or more targets together with the determined range and/or radial velocity resolution 510.

Figure 8B illustrates methods performed by the control unit 120 discussed above. This method comprises obtaining Sb1 detections or radar data from a radar transceiver 110 in frames 260 having frame durations 270 and also obtaining Sb2 respective range and/or radial velocity resolutions 510 determined in dependence of a transmission resource assignment of the radar transceiver in each frame as discussed above. The method further comprises tracking Sb3 the one or more targets by weighting the radar detections relative to a-priori track data in dependence of the obtained range and/or radial velocity resolution 510.

Figure 9 schematically illustrates, in terms of a number of functional units, the components of a radar transceiver 110 or a control unit 120 according to embodiments of the present disclosure. Processing circuitry 910 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 930. The processing circuitry 910 may further be provided as at least one application specific integrated circuit (ASIC), or field programmable gate array (FPGA).

Particularly, the processing circuitry 910 is configured to cause the control unit 1000 to perform a set of operations, or steps. These operations, or steps, were discussed above in connection to the various radar transceivers and methods. For example, the storage medium 930 may store the set of operations, and the processing circuitry 910 may be configured to retrieve the set of operations from the storage medium 930 to cause the control unit 1000 to perform the set of operations. The set of operations may be provided as a set of executable instructions. Thus, the processing circuitry 910 is thereby arranged to execute methods and operations as herein disclosed.

The storage medium 930 may also comprise persistent storage, which, for example, can be any single one or combination of magnetic memory, optical memory, solid state memory or even remotely mounted memory.

The radar transceiver 110 or the control unit 120 may further comprise a communications interface 920 for communications with at least one other unit. As such, the interface 920 may comprise one or more transmitters and receivers, comprising analogue and digital components and a suitable number of ports for wired or wireless communication.

The processing circuitry 910 is adapted to control the general operation of the radar transceiver 110 or the control unit 120 e.g. by sending data and control signals to the external unit and the storage medium 930, by receiving data and reports from the external unit, and by retrieving data and instructions from the storage medium 930. Other components, as well as the related functionality, of the radar transceiver 110 or the control unit 120 are omitted in order not to obscure the concepts presented herein.

Figure 10 shows a computer program product 1000 comprising computer executable instructions 1020 arranged on a computer readable medium 1010 to execute any of the methods disclosed herein.

**Claims**

1. A radar transceiver (110) for automotive applications, the transceiver (110) comprising processing circuitry (910) arranged to obtain a transmission resource assignment (530) comprising a variable number of assigned subcarriers and time slots for radar operation in a frame (260) having a frame duration (270), and to transmit a radar signal (114) occupying the assigned subcarriers and time slots in the frame,

   wherein the processing circuitry (910) is arranged to detect a target (115, 330, 340, 350) from backscatter of the transmitted radar signal,
   **characterized in that**
   the processing circuitry (910) is arranged to determine a range resolution and/or a radial velocity resolution for the target based on the transmission resource assignment, and **in that**
   the radar transceiver (110) further comprises a communications interface (920) configured to report the detected one or more targets together with the determined range and/or radial velocity resolution (510) of a respective frame to a control unit (120) to track the one or more targets by weighting the radar detections relative to a-priori track data in dependence of the range and/or radial velocity resolution (510).

2. The radar transceiver (110) according to claim 1, wherein the processing circuitry (910) is arranged to obtain a transmission power per subcarrier or per group of subcarriers.

3. The radar transceiver (110) according to any previous claim, wherein the processing circuitry (910) is arranged to report a range resolution which increases with number of assigned subcarriers.

4. The radar transceiver (110) according to any previous claim, wherein the processing circuitry (910) is arranged to report a radial velocity resolution which increases with the number of time slots.

5. The radar transceiver (110) according to any previous claim, wherein the processing circuitry (910) is arranged to determine a transmitted energy as function of number of assigned subcarriers and time slots, and wherein the communications interface (920) is configured to report an estimated target detection range associated with the transmission resource assignment.

6. The radar transceiver (110) according to claim 5, wherein the processing circuitry (910) is arranged to determine the transmitted energy also as a function of a transmitted power per subcarrier in the transmission resource assignment.

7. The radar transceiver (110) according to any previous claim, comprising a transmit antenna array (650) and/or a receive antenna array (660), wherein the transmit antenna array and/or the receive antenna array is configured to reduce power of the transmitted radar signal (114, 640) from the transmit antenna array (650) towards the receive antenna array (660) while maintaining transmitted power in a main lobe direction (710).

8. A control unit (120) for automotive applications, arranged to track one or more targets (115) based on radar detections, wherein the control unit (120) is arranged to obtain the radar detections from a radar transceiver (110) in frames (260) having frame durations (270) together with respective range and/or radial velocity resolutions (510) determined in dependence of a transmission resource assignment of the radar transceiver in each respective frame, wherein the control unit (120)is arranged to track the one or more targets by weighting the radar detections relative to a-priori track data in dependence of the range and/or radial velocity resolution (510).

9. The control unit (120) according to claim 8, arranged to track the one or more targets (115) by respective Kalman filters, wherein a Kalman filter gain for each Kalman filter is configured in dependence of the range and/or radial velocity resolution (510) for each frame.

10. The control unit (120) according to claim 8, arranged to track the one or more targets (115) by respective particle filters, wherein a particle filter gain for each particle filter is configured in dependence of the range and/or radial velocity resolution (510) for each frame.

11. The control unit (120) according to any of claims 8-10 arranged to maintain a connection (145) to a cellular communication system (140, 150), and to obtain a transmission resource assignment (530) comprising a variable number of assigned subcarriers and time slots for radar operation in a frame (260) having a frame duration (270) from the cellular communication system (140, 150), and to control the radar transceiver (110) to transmit a radar signal (114) occupying the assigned subcarriers and time slots in the frame.

12. The control unit (120) according to claim 11, arranged to determine a need to separate two or more closely spaced targets, and to request a transmission resource assignment (530) comprising increased bandwidth and or time duration in response to determining the need to separate two or more closely spaced targets.

13. The control unit (120) according to claim 11 or 12, arranged to quantify a need to determine a number of targets located in a field or in fields of view (111, 112, 113) of the radar transceiver (110), and to request a transmission resource assignment (530) comprising increased bandwidth and or time duration in response to determining the number of targets located in the field or fields of view.

14. A radar system on chip, SOC, (500) comprising a radar transceiver (110) according to any of claims 1-7, and a control unit according to any of claims 8-13.

15. A vehicle comprising a radar transceiver (110) according to any of claims 1-7, and a control unit (120) according to any of claims 8-13, or a system on chip, SOC, according to claim 14.

**Patentansprüche**

1. Radarsendeempfänger (110) für Automobilanwendungen, der Sendeempfänger (110) umfassend eine Verarbeitungsschaltung (910), die angeordnet ist, um eine Übertragungsressourcenzuweisung (530), umfassend eine variable Anzahl zugewiesener Unterträger und Zeitschlitze für einen Radarbetrieb in einem Frame (260), der eine Frame-Dauer (270) aufweist, zu erhalten und um ein Radarsignal (114), das die zugewiesenen Unterträger und Zeitschlitze in dem Frame belegt, zu übertragen,
wobei die Verarbeitungsschaltung (910) angeordnet ist, um ein Ziel (115, 330, 340, 350) aus Rückstreuung des übertragenen Radarsignals zu erfassen, **dadurch gekennzeichnet, dass** die Verarbeitungsschaltung (910) angeordnet ist, um eine Entfernungsauflösung und/oder eine radiale Geschwindigkeitsauflösung für das Ziel basierend auf der Übertragungsressourcenzuweisung zu bestimmen,
**und dass** der Radarsendeempfänger (110) ferner eine Kommunikationsschnittstelle (920), die konfiguriert ist, um das erfasste eine oder die mehreren Ziele zusammen mit der bestimmten Entfernungs- und/oder radialen Geschwindigkeitsauflösung (510) eines jeweiligen Frames an eine Steuereinheit (120) zu melden, um das eine oder die mehreren Ziele durch Gewichten der Radarerfassungen relativ zu a-priori-Verfolgungsdaten in Abhängigkeit von der Entfernungs- und/oder radialen Geschwindigkeitsauflösung (510) zu verfolgen, umfasst.

2. Radarsendeempfänger (110) nach Anspruch 1, wobei die Verarbeitungsschaltung (910) angeordnet ist, um eine Übertragungsleistung pro Unterträger oder pro Gruppe von Unterträgern zu erhalten.

3. Radarsendeempfänger(110) nach einem der vorhergehenden Ansprüche, wobei die Verarbeitungsschaltung (910) angeordnet ist, um eine Entfernungsauflösung, die mit der Anzahl zugewiesener Unterträger steigt, zu melden.

4. Radarsendeempfänger (110) nach einem der vorhergehenden Ansprüche, wobei die Verarbeitungsschaltung (910) angeordnet ist, um eine radiale Geschwindigkeitsauflösung, die mit der Anzahl von Zeitschlitzen steigt, zu melden.

5. Radarsendeempfänger (110) nach einem der vorhergehenden Ansprüche, wobei die Verarbeitungsschaltung (910) angeordnet ist, um eine übertragene Energie in Abhängigkeit von der Anzahl zugewiesener Unterträger und Zeitschlitze zu bestimmen, und wobei die Kommunikationsschnittstelle (920) konfiguriert ist, um eine geschätzte Zielerfassungsreichweite, die mit der Übertragungsressourcenzuweisung verknüpft ist, zu melden.

6. Radarsendeempfänger (110) nach Anspruch 5, wobei die Verarbeitungsschaltung (910) angeordnet ist, um die übertragene Energie ebenso in Abhängigkeit von einer übertragenen Leistung pro Unterträger in der Übertragungsressourcenzuweisung zu bestimmen.

7. Radarsendeempfänger (110) nach einem der vorhergehenden Ansprüche, umfassend ein Sendeantennenarray (650) und/oder ein Empfangsantennenarray (660), wobei das Sendeantennenarray und/oder das Empfangsantennenarray konfiguriert ist, um eine Leistung des übertragenen Radarsignals (114, 640) von dem Sendeantennenarray (650) zu dem Empfangsantennenarray (660) zu reduzieren, während die übertragene Leistung in einer Hauptkeulenrichtung (710) aufrechterhalten wird.

8. Steuereinheit (120) für Automobilanwendungen, die angeordnet ist, um ein oder mehrere Ziele (115) basierend auf Radarerfassungen zu verfolgen, wobei die Steuereinheit (120) angeordnet ist, um die Radarerfassungen von einem Radarsendeempfänger (110) in Frames (260), die Frame-Dauern (270) aufweisen, zusammen mit jeweiligen Entfernungs- und/oder radialen Geschwindigkeitsauflösungen (510), die in Abhängigkeit von einer Übertragungsressourcenzuteilung des Radarsendeempfängers in jedem jeweiligen Frame bestimmt werden, zu erhalten, wobei die Steuereinheit (120) angeordnet ist, um das eine oder der mehreren Ziele durch Gewichtung der Radarerfassungen relativ zu a-priori-Verfolgungsdaten in Abhängigkeit von der Entfernungs- und/oder radialen Geschwindigkeitsauflösung (510) zu verfolgen.

9. Steuereinheit (120) nach Anspruch 8, die angeordnet ist, um das eine oder die mehreren Ziele (115) durch jeweilige Kalman-Filter zu verfolgen, wobei eine Kalman-Filterverstärkung für jeden Kalman-Filter in Abhängigkeit von der Entfernungs- und/oder radialen Geschwindigkeitsauflösung (510) für jeden Frame konfiguriert ist.

10. Steuereinheit (120) nach Anspruch 8, die angeordnet ist, um das eine oder die mehreren Ziele (115) durch jeweilige Partikelfilter zu verfolgen, wobei eine Partikelfilterverstärkung für jeden Partikelfilter in Abhängigkeit von der Entfernungs- und/oder radialen Geschwindigkeitsauflösung (510) für jeden Frame konfiguriert ist.

**11.** Steuereinheit (120) nach einem der Ansprüche 8 bis 10, die angeordnet ist, um eine Verbindung (145) mit einem zellularen Kommunikationssystem (140, 150) aufrechtzuerhalten und um eine Übertragungsressourcenzuweisung (530), umfassend eine variable Anzahl zugewiesener Unterträger und Zeitschlitze für den Radarbetrieb in einem Frame (260), der eine Frame-Dauer (270) aufweist, von dem zellularen Kommunikationssystem (140, 150) zu erhalten und um den Radarsendeempfänger (110) zu steuern, um ein Radarsignal (114) zu übertragen, das die zugewiesenen Unterträger und Zeitschlitze in dem Frame belegt.

**12.** Steuereinheit (120) nach Anspruch 11, die angeordnet ist, um einen Bedarf, zwei oder mehr eng beabstandete Ziele zu trennen, zu bestimmen und um eine Übertragungsressourcenzuweisung (530), umfassend eine steigende Bandbreite und/oder Zeitdauer, anzufordern, als Reaktion auf das Bestimmen des Bedarfs, zwei oder mehr eng beabstandete Ziele zu trennen.

**13.** Steuereinheit (120) nach Anspruch 11 oder 12, die angeordnet ist, um einen Bedarf, eine Anzahl von Zielen, die sich in einem Sichtfeld oder in Sichtfeldern (111, 112, 113) des Radarsendeempfängers (110) befinden, zu bestimmen, zu quantifizieren und um eine Übertragungsressourcenzuweisung (530), umfassend eine steigende Bandbreite und/oder Zeitdauer, anzufordern, als Reaktion auf das Bestimmen der Anzahl von Zielen, die sich in dem Sichtfeld oder den Sichtfeldern befinden.

**14.** Radar-System-on-Chip, SOC, (500), umfassend einen Radarsendeempfänger (110) nach einem der Ansprüche 1 bis 7 und eine Steuereinheit nach einem der Ansprüche 8 bis 13.

**15.** Fahrzeug, umfassend einen Radarsendeempfänger (110) nach einem der Ansprüche 1 bis 7 und eine Steuereinheit (120) nach einem der Ansprüche 8 bis 13 oder ein System-on-Chip, SOC, nach Anspruch 14.

## Revendications

**1.** Émetteur-récepteur radar (110) pour applications automobiles, l'émetteur-récepteur (110) comprenant un ensemble de circuits de traitement (910) agencé pour obtenir une affectation de ressources d'émission (530) comprenant un nombre variable de sous-porteuses et créneaux temporels affectés pour un fonctionnement radar dans une trame (260) ayant une durée de trame (270), et pour émettre un signal radar (114) occupant les sous-porteuses et créneaux temporels affectés dans la trame,
dans lequel l'ensemble de circuits de traitement (910) est agencé pour détecter une cible (115, 330, 340, 350) à partir d'une rétrodiffusion du signal radar émis, **caractérisé en ce que** l'ensemble de circuits de traitement (910) est agencé pour déterminer une résolution de portée et/ou une résolution de vitesse radiale pour la cible sur la base de l'affectation de ressources d'émission, et **en ce que** l'émetteur-récepteur radar (110) comprend en outre une interface de communications (920) configurée pour signaler les une ou plusieurs cibles détectées conjointement avec la résolution de vitesse radiale et/ou de portée (510) déterminée d'une trame respective à une unité de commande (120) pour suivre les une ou plusieurs cibles en pondérant les détections radar par rapport à des données de suivi a priori en dépendance de la résolution de vitesse radiale et/ou de portée (510).

**2.** Émetteur-récepteur radar (110) selon la revendication 1, dans lequel l'ensemble de circuits de traitement (910) est agencé pour obtenir une puissance d'émission par sous-porteuse ou par groupe de sous-porteuses.

**3.** Émetteur-récepteur radar (110) selon l'une quelconque revendication précédente, dans lequel l'ensemble de circuits de traitement (910) est agencé pour signaler une résolution de portée qui augmente avec le nombre de sous-porteuses affectées.

**4.** Émetteur-récepteur radar (110) selon l'une quelconque revendication précédente, dans lequel l'ensemble de circuits de traitement (910) est agencé pour signaler une résolution de vitesse radiale qui augmente avec le nombre de créneaux temporels.

**5.** Émetteur-récepteur radar (110) selon l'une quelconque revendication précédente, dans lequel l'ensemble de circuits de traitement (910) est agencé pour déterminer une énergie émise en fonction d'un nombre de sous-porteuses et créneaux temporels affectés, et dans lequel l'interface de communications (920) est configurée pour signaler une portée de détection de cible estimée associée à l'affectation de ressources d'émission.

**6.** Émetteur-récepteur radar (110) selon la revendication 5, dans lequel l'ensemble de circuits de traitement (910) est agencé pour déterminer l'énergie émise également en fonction d'une puissance émise par sous-porteuse dans l'affectation de ressources d'émission.

7. Émetteur-récepteur radar (110) selon l'une quelconque revendication précédente, comprenant un réseau d'antennes d'émission (650) et/ou un réseau de antennes de réception (660), dans lequel le réseau d'antennes d'émission et/ou le réseau d'antennes de réception est configuré pour réduire une puissance du signal radar (114, 640) émis du réseau d'antennes d'émission (650) vers le réseau d'antennes de réception (660) tout en maintenant une puissance émise dans une direction de lobe principal (710).

8. Unité de commande (120) pour applications automobiles, agencée pour suivre une ou plusieurs cibles (115) sur la base de détections radar, dans laquelle l'unité de commande (120) est agencée pour obtenir les détections radar à partir d'un émetteur-récepteur radar (110) dans des trames (260) ayant des durées de trame (270) conjointement avec des résolutions de vitesse radiale et/ou de portée (510) respectives déterminées en dépendance d'une affectation de ressources d'émission de l'émetteur-récepteur radar dans chaque trame respective, dans laquelle l'unité de commande (120) est agencée pour suivre les une ou plusieurs cibles en pondérant les détections radar par rapport à des données de suivi a priori en dépendance de la résolution de vitesse radiale et/ou de portée (510).

9. Unité de commande (120) selon la revendication 8, agencée pour suivre les une ou plusieurs cibles (115) par des filtres de Kalman respectifs, dans laquelle un gain de filtre de Kalman pour chaque filtre de Kalman est configuré en dépendance de la résolution de vitesse radiale et/ou de portée (510) pour chaque trame.

10. Unité de commande (120) selon la revendication 8, agencée pour suivre les une ou plusieurs cibles (115) par des filtres à particules respectifs, dans laquelle un gain de filtre à particules pour chaque filtre à particules est configuré en dépendance de la résolution de vitesse radiale et/ou de portée (510) pour chaque trame.

11. Unité de commande (120) selon l'une quelconque des revendications 8 à 10 agencée pour maintenir une liaison (145) à un système de communication cellulaire (140, 150), et pour obtenir une affectation de ressources d'émission (530) comprenant un nombre variable de sous-porteuses et créneaux temporels affectés pour le fonctionnement radar dans une trame (260) ayant une durée de trame (270) provenant du système de communication cellulaire (140, 150), et pour commander l'émetteur-récepteur radar (110) afin d'émettre un signal radar (114) occupant les sous-porteuses et créneaux temporels affectés dans la trame.

12. Unité de commande (120) selon la revendication 11, agencée pour déterminer un besoin de séparer deux cibles rapprochées ou plus, et pour demander une affectation de ressources d'émission (530) comprenant une largeur de bande et/ou une durée temporelle augmentées en réponse à la détermination du besoin de séparer deux cibles rapprochées ou plus.

13. Unité de commande (120) selon la revendication 11 ou 12, agencée pour quantifier un besoin de déterminer un nombre de cibles situées dans un champ ou dans des champs de vision (111, 112, 113) de l'émetteur-récepteur radar (110), et pour demander une affectation de ressources d'émission (530) comprenant une largeur de bande et/ou une durée temporelle augmentées en réponse à la détermination du nombre de cibles situées dans le champ ou les champs de vision.

14. Système radar sur puce, SOC, (500) comprenant un émetteur-récepteur radar (110) selon l'une quelconque des revendications 1 à 7, et une unité de commande selon l'une quelconque des revendications 8 à 13.

15. Véhicule comprenant un émetteur-récepteur radar (110) selon l'une quelconque des revendications 1 à 7, et une unité de commande (120) selon l'une quelconque des revendications 8 à 13, ou un système sur puce, SOC, selon la revendication 14.

FIG. 1

FIG. 2

FIG. 3

FIG. 4

FIG. 5

FIG. 6

FIG. 7

Sa1

Sa2

Sa3

Sa4

Sa5

FIG. 8A

Sb1

Sb2

Sb3

FIG. 8B

110, 120

910
processing
circuitry

920
interface

930
storage

FIG. 9

1000

1010

1020

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3489710 A1
- US 2020072963 A
- US 2020119780 A
- US 2019391246 A
- US 2018348353 A
- WO 2016022727 A
- US 2013229298 A

**Non-patent literature cited in the description**

- **C. BAQUERO BARNETO et al.** Full-Duplex OFDM Radar With LTE and 5G NR Waveforms: Challenges, Solutions, and Measurements. *IEEE Transactions on Microwave Theory and Techniques*, October 2019, vol. 67 (10), 4042-4054
- **XIA YANG** ; **SONG ZHIYONG** ; **LU ZAIQI** ; **FU QIANG**. A novel range-Doppler imaging algorithm with OFDM radar. *Chinese Journal of Aeronautics*, 2016, vol. 29 (2), 492-501